# NEUE EUROPÄISCHE PATENTSCHRIFT

(11) **EP 2 166 269 B2**
(45) Veröffentlichungstag und Bekanntmachung des Hinweises auf die Entscheidung über den Einspruch: **10.08.2016**
(45) Hinweis auf die Patenterteilung: 20.03.2013
(21) Anmeldenummer: 09011901.7
(22) Anmeldetag: 18.09.2009
(51) Int. Cl.: F16L 59/20

(54) **Verfahren zum Verbinden von ummantelten Rohren**
Method for connecting cladded pipes
Procédé de raccordement de tuyaux enveloppés

(30) Priorität: 19.09.2008 DE 102008048104
(43) Veröffentlichungstag der Anmeldung: 24.03.2010
(73) Patentinhaber: isoplus Fernwärmetechnik GmbH, 99706 Sondershausen (DE)
(72) Erfinder: Kauschat, Jörg, 99735 Hainrode (DE)
(74) Vertreter: Hauck Patentanwaltspartnerschaft mbB

(56) Entgegenhaltungen:
- EP-A- 0 081 670
- EP-A- 0 188 363
- EP-A- 0 348 761
- US-A- 3 685 546
- US-A- 3 711 124
- US-A- 3 744 823
- US-A- 5 328 648
- US-A1- 2005 156 429
- US-B1- 6 355 318
- LOGSTOR Katalog Installation Manual 2006 Feb.
- LOGSTOR Katalog Monteringanvisning Mai 2006
- LOGSTOR Katalog Samling B2A Sept. 1985
- LOGSTOR Katalog Samling C1A Sept. 1985

## Beschreibung

Die vorliegende Erfindung betrifft ein Verfahren zum Verbinden von ummantelten Mediumrohren, deren Mantel eine innere Schaumschicht und eine äußere Kunststoffschicht aufweist.

Solche ummantelten Mediumrohre finden insbesondere als Fernwärmerohre Verwendung. Die Rohre bestehen aus einem Mediumrohr, bei dem es sich üblicherweise um ein Stahlrohr handelt, und einem Rohrmantel, der sich aus einer inneren Schaumschicht zur Wärmedämmung und einer äußeren Kunststoffschicht, die die äußere Abdeckung bildet, zusammensetzt. Wenn solche Rohre, insbesondere Fernwärmerohre, verbunden werden sollen, muss an den Rohrenden der Mantel, d.h. sowohl die innere Schaumschicht als auch die äußere Kunststoffschicht, entfernt werden, so dass die Mediumrohre freiliegen. Erst dann ist eine Verbindung der Mediumrohre, beispielsweise Stahlrohre durch Verschweißen, möglich. Im Anschluss daran ist es notwendig, den Rohrmantel, insbesondere die zur Wärmedämmung dienende Schaumschicht, an der Verbindungsstelle wiederherzustellen. Solche Rohre werden auch von Hause aus bereits so hergestellt, dass das Mediumrohr axial gegenüber der Ummantelung vorsteht.

Zur Herstellung von derartigen Rohrverbindungen ist es bekannt, Muffen zur verwenden, die auf ein Rohr geschoben und nach Herstellung der Verbindung zwischen den Mediumrohren auf die Verbindungsstelle geschoben werden. Der unter der Muffe befindliche Ringraum des fehlenden Rohrmantels wird danach ausgeschäumt, um eine entsprechende Wärmedämmung über der Verbindungsstelle vorzusehen. Das Ausschäumen erfolgt dabei über eine in der Muffe vorgesehene Öffnung sowie mindestens ein Entlüftungsloch. Diese Vorgehensweise hat jedoch den Nachteil, dass die Qualität der Ausschäumung infolge der diese abdeckenden Muffe nicht mehr überprüft werden kann. So kann es dazu kommen, dass der Ringraum, den die Muffe umgibt, nur teilweise ausgeschäumt wird.

Bei einer anderen Verfahrensweise wird der fehlende Rohrmantelbereich an der Verbindungsstelle mit vorgefertigten Halbschalen aus Schaum abgedichtet. Diese Vorgehensweise ist jedoch aufwendig, da die vorgefertigten Abdichtungselemente passgenau gefertigt werden müssen, d.h. genau an die jeweilige Verbindungsstelle angepasst werden müssen. Sind die vorgefertigten Teile zu klein, ergibt sich eine mangelhafte Dämmung. Sind sie zu groß, müssen die Teile nachbearbeitet werden.

Aus der DE 20 2006 012 463 U1 und der DE 20 2006 012 464 U1 ist es bekannt, zur Nachisolierung der Verbindungsstelle von Rohren Abdeckungsvorrichtungen zu verwenden, die zwei Abdeckungsschalen umfassen. Die Abdeckungsschalen werden an der Verbindungsstelle angeordnet und miteinander verspannt. Durch Einfüllöffnungen in den Abdeckungsschalen wird ein Schaummaterial eingeführt, das den Ringraum unter der Abdeckungsvorrichtung durch Expansion ausfüllt. Auch bei dieser Vorgehensweise besteht keine Möglichkeit, die Qualität der erzeugten Schaumschicht zu überprüfen.

Aus der US-A-3 685 546 ist ein Verfahren zum Verbinden von ummantelten Mediumrohren, deren Mantel eine innere Schaumschicht und eine äußere Kunststoffschicht aufweist, bekannt. Bei diesem Verfahren werden die Mediumrohre miteinander verbunden, und es wird die äußere Kunststoffschicht über die Stirnseiten der Schaumschicht nach innen auf die Mediumrohre gezogen und dort befestigt. Es folgt dann eine Umwicklung mit einer Glasfaserschicht, wonach ein hitzehärtendes Harz aufgebracht wird. Der verbleibende Ringraum über der Verbindungsstelle wird dann mit Hilfe einer Schäumschalung ausgeschäumt, wonach eine Schrumpfmuffe auf den ausgeschäumten Ringraum aufgebracht wird. Bei diesem Verfahren müssen daher die Stirnseiten der Schaumschicht und die Außenseiten der verbundenen Mediumrohre auf spezielle Weise abgedichtet werden, bevor die Ausschäumung des Ringraumes durchgeführt wird.

Aus der US-A-5 328 648 ist ein Rohrverbindungsverfahren bekannt, bei dem zuerst auf die Verbindungsstelle der Rohre eine Schrumpfmuffe aufgebracht wird, wonach der Raum über der Schrumpfmuffe ausgefüllt wird. Die entsprechenden Rohre weisen eine Ummantelung aus Beton auf.

Bei dem aus der EP-A-O 348 761 bekannten Rohrverbindungsverfahren wird ohne Schrumpfmuffe gearbeitet und eine Schaumstoffdämmung auf den Bereich der Rohrverbindungsstelle aufgebracht. Diese Schaumstoffdämmung kann mit Hilfe einer Schäumschalung hergestellt werden, wobei allerdings die Schäumschalung exakt die Längenabmessung des Ringraumes über der Rohrverbindungsstelle haben muss.

Das in der EP-A-0 081 670 beschriebene Verfahren entspricht dem eingangs erläuterten Stand der Technik, gemäß dem der Ringraum mit einem auf der Verbindungsstelle verbleibenden Muffenrohr ausgeschäumt wird, so dass keine Möglichkeit zur Überprüfung der Ausschäumung besteht. Auf das Muffenrohr wird unter Zwischenlage einer Folie ein Schrumpfschlauch aufgeschrumpft.

Auch bei dem aus der US 3 711 124 A beschriebenen Verfahren zum Verbinden von ummantelten Mediumrohren wird eine äußere Kunststoffschicht über die Stirnseiten der Schaumschicht nach innen auf die Mediumrohre gezogen und dort befestigt. Der verbleibende Ringraum wird ausgeschäumt, wonach eine Schrumpfmuffe direkt auf den ausgeschäumten Ringraum aufgebracht wird.

Aus der US 6 355 318 B1 und EP 0 188 363 A sind Verfahren bekannt, bei denen ebenfalls ein Ringraum mit Hilfe einer Schäumschalung ausgeschäumt wird, wonach eine Schrumpfmuffe direkt auf die hergestellte Schaumisolation aufgeschrumpft wird.

Die US 6 355 318 B1 offenbart somit ein Verfahren zum Verbinden von ummantelten Mediumrohren, deren Mantel eine innere Schaumschicht und eine äußere Kunststoffschicht aufweist, wobei der Mantel gegenüber dem Rand der zu verbindenden Mediumrohre axial zurückspringt, mit den folgenden Schritten:
- Aufschieben einer Schrumpfmuffe auf ein ummanteltes Mediumrohr vor dem Verbinden der Mediumrohre;
- Verbinden der Mediumrohre;
- Anordnen einer Schäumschalung um den von den verbundenen Mediumrohren und den Stirnseiten der inneren Schaumschichten und äußeren Kunststoffschichten der beiden Rohre begrenzten Ringraum;
- Ausschäumen des Ringraumes;
- Entfernen der Schäumschalung; und
- Aufschrumpfen der Schrumpfmuffe zur Abdeckung des ausgeschäumten Ringraumes.

Der vorliegenden Erfindung liegt die Aufgabe zugrunde, ein Verfahren der eingangs, wiedergegebenen Art zu schaffen, mit dem sich qualitativ besonders gute Mantelrohrverbindungen herstellen lassen.

Diese Aufgabe wird erfindungsgemäß durch ein Verfahren mit den Merkmalen von Patentanspruch 1 gelöst.

Das erfindungsgemäße Verfahren hat den Vorteil, dass durch die Verwendung einer zusätzlichen Schäumschalung zur eigentlichen Schrumpfmuffe der ausgeschäumte Ringraum untersucht werden kann, bevor die endgültige Schrumpfmuffe aufgeschrumpft wird. Nach dem Aushärten des Schaumes und dem Entfernen der Schäumschalung ist der ausgeschäumte Ringraum frei zugänglich und kann insbesondere visuell auf Fehler, freibleibende Stellen etc. inspiziert werden. Sind entsprechende Fehler vorhanden, können die erforderlichen Gegenmaßnahmen getroffen werden. Auf diese Weise kann sichergestellt werden, dass eine Schrumpfmuffe nur auf einen einwandfrei ausgeschäumten Ringraum aufgebracht wird.

Vor dem Aufschrumpfen der Schrumpfmuffe wird eine Schrumpffolie auf den ausgeschäumten Ringraum aufgebracht und sofort oder zusammen mit der Schrumpfmuffe aufgeschrumpft. Die Schrumpffolie wird dabei so aufgeschrumpft, dass sie sich bis auf die Mantelflächen der beiden Rohre erstreckt, somit die äußere Kunststoffschicht des Mantels der Rohre überlappt.

Da die verwendete Schäumschalung vorzugsweise weiterverwendbar ist, d.h. nach dem Entfernen für andere Verbindungsstellen eingesetzt werden kann, ist für die Durchführung des erfindungsgemäßen Verfahrens trotz der erreichten höheren Sicherheit kein großer Aufwand erforderlich. Es gelingt daher die Sicherstellung von qualitativ einwandfreien bzw. fehlerfreien Rohrverbindungen.

Insbesondere wird vermieden, dass auf der Baustelle Muffen angebohrt werden müssen, um Schaummaterial einzufüllen und den Hohlraum auszuschäumen. Dies ist aufwändig und insbesondere in Bezug auf das Wiederverschließen der Bohrung problematisch.

Bei dem erfindungsgemäßen Verfahren wird der zwischen den Mantelenden der beiden Rohre gebildete Ringraum vor dem Anordnen der Schäumschalung mit einer Trennfolie abgedeckt. Hierdurch wird sichergestellt, dass die Schäumschalung problemfrei vom ausgeschäumten Ringraum entfernt werden kann.

In Weiterbildung der Erfindung wird eine Schäumschalung mit einem Schäumloch und mindestens einem Entlüftungsloch verwendet, insbesondere eine Schäumschalung mit einem zentralen Schäumloch und zwei seitlichen Entlüftungslöchern. Auf diese Weise wird sichergestellt, dass eine einwandfreie und gleichmäßige Ausschäumung des Ringraumes erreicht wird.

Um die an die Mantelenden grenzenden Abdichtungsflächen nicht zu verunreinigen, beispielsweise durch den Schäumvorgang, werden diese zweckmäßigerweise vor dem Anordnen der Schäumschalung mit einer Schutzfolie abgeklebt.

Der ausgeschäumte Ringraum wird zweckmäßigerweise nach dem Entfernen der Schäumschalung auf seine Qualität getestet. Dies kann beispielsweise durch visuelle Inspektion geschehen, da die Schaumfüllung des Ringraumes nach dem Entfernen der Schäumschalung und ggf. der verwendeten Trennfolie frei zugänglich ist. Das nachfolgende Aufschrumpfen der Schrumpfmuffe wird somit erst dann vorgenommen, wenn sich der Monteur vom einwandfreien Zustand der Schaumfüllung des Ringraumes überzeugt hat.

Die Schrumpfmuffe wird vor dem Verbinden der Mediumrohre auf ein Rohr aufgeschoben und zum Aufschrumpfen auf die Schaumfüllung des Ringraumes bzw. die bereits aufgeschrumpfte Schrumpffolie bewegt. Die Schrumpfmuffe wird danach in bekannter Weise aufgeschrumpft, wobei die Schrumpfmuffe ebenfalls so aufgeschrumpft wird, dass sie jeweils die Mäntel der zu verbindenden Rohre überlappt.

Die im erfindungsgemäßen Verfahren verwendete Schäumschalung kann beispielsweise aus Metallblech oder glasfaserverstärktem Kunststoff bestehen. Die Schäumschalung kann aufklappbar ausgebildet sein, beispielsweise in der Form von zwei Halbschalen, so dass sie sich einfach anbringen und entfernen lässt. Die beiden Halbschalen können beispielsweise miteinander verspannt werden, so dass sich eine rasche Montage und Demontage der Schäumschalung erreichen lässt. Natürlich sind auch andere Befestigungsarten möglich, beispielsweise Verklemmen, Verschrauben etc.

Die Schäumschalung wird vorzugsweise so angeordnet, dass ihre Innenseite mit der Außenseite des Rohrmantels bündig ist.

Ein bevorzugtes Material für die Schrumpfmuffe ist vernetztes Polyethylen (PE-X). Als Schaummaterial findet vorzugsweise ein PUR-Schaum Verwendung. Die aufgebrachte Schrumpffolie besteht vorzugsweise aus Polyethylen.

Entgegen der bisher bekannten Vorgehensweise wird daher beim erfindungsgemäßen Verfahren der Muffenhohlraum (der zwischen den Mantelenden der beiden Rohre gebildete Ringraum) vor der Aufschrumpfung der Muffe mit Schaum, vorzugsweise PUR-Schaum, mittels einer Schäumschalung ausgeschäumt. Hierdurch kann die Qualität des Schaumes überprüft werden. Die üblichen Schaum- bzw. Entlüftungsöffnungen an den Muffen selbst können entfallen. Hierdurch wird eine zusätzliche Minimierung von Fehlermöglichkeiten erreicht.

Die Erfindung wird nachfolgend anhand eines Ausführungsbeispieles in Verbindung mit der Zeichnung im Einzelnen erläutert. Es zeigen:
- Figur 1: einen Vertikalschnitt durch eine Rohrverbindung mit bereits verschweißten Mediumrohren vor Durchführung des Verbindungsverfahrens;
- Figur 2: einen Vertikalschnitt wie Figur 1 in einem Stadium des Verbindungsverfahrens nach dem Anordnen der Schäumschalung; und
- Figur 3: einen Vertikalschnitt wie Figur 1 und 2 nach Beendigung des Verbindungsverfahrens mit aufgebrachter Schrumpfmuffe.

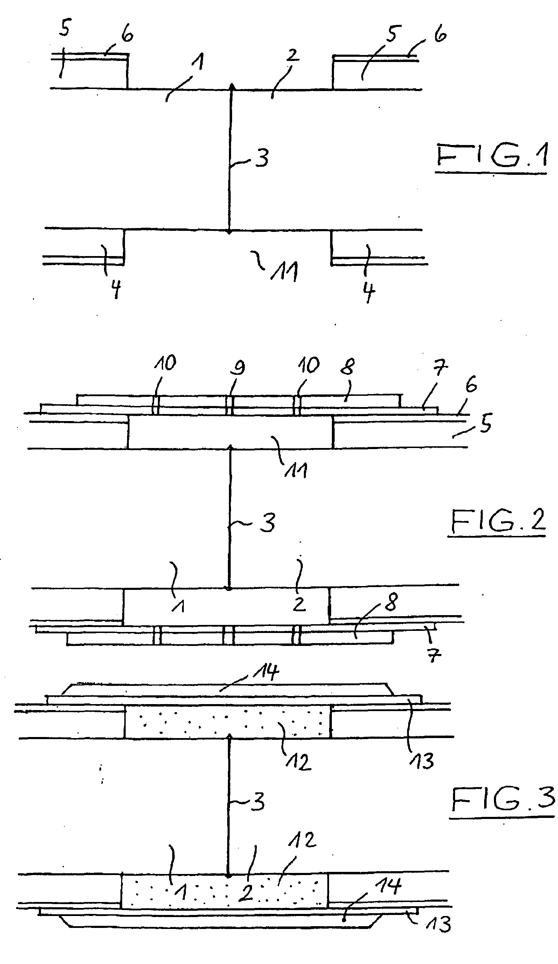

Figur 1 zeigt im Vertikalschnitt ein erstes Mediumrohr 1, beispielsweise ein Stahlrohr eines Fernwärmerohres, das einen Rohrmantel 4 besitzt, der aus einer inneren Schaumschicht 5 aus PUR-Schaum und einer äußeren Kunststoffschicht 6 als Abdeckung besteht. Der Rohrmantel 4 ist gegenüber dem Mediumrohr 1 in Axialrichtung zurückversetzt. Figur 1 zeigt ein weiteres Mediumrohr 2 mit entsprechendem Rohrmantel 4, der ebenfalls eine innere Schaumschicht 5 und eine äußere Kunststoffschicht 6 als Abdeckung aufweist. Beide Mediumrohre sind miteinander verschweißt, wie bei 3 gezeigt. Der zwischen den beiden Rohrmänteln 4 gebildete Ringraum ist mit 11 bezeichnet.

Figur 2 ist eine entsprechende Darstellung wie Figur 1 nach Anordnung einer Schäumschalung 8 zum Ausschäumen des Ringraumes 11. Zum Ausschäumen wird der Ringraum 11 mit einer Trennfolie 7 abgedeckt, auf die die zylindrisch ausgebildete Schäumschalung aufgebracht wird. Die Schäumschalung 8 kann beispielsweise aus zwei Halbschalen bestehen, die miteinander verspannt werden. Die Schäumschalung 8 besitzt eine zentrale Öffnung 9 zur Einbringung eines geeigneten Schaummateriales (PUR) sowie zwei beidseitig hiervon angeordnete Entlüftungsöffnungen 10. Über die Öffnung 9 wird eine genau auf die Größe des Ringraumes 11 abgestimmte Schaummaterialmenge eingebracht und zum Expandieren gebracht, so dass der gesamte Ringraum 11 ausgeschäumt wird.

Nach dem Aushärten des Schaumes werden die Schäumschalung 8 sowie die Trennfolie 7 entfernt. Die Qualität der hergestellten Ausschäumung kann nunmehr visuell überprüft werden. Ist diese korrekt, werden eine Schrumpffolie 13 und danach eine Schrumpfmuffe 14 aufgebracht, wie in Figur 3 gezeigt. Die Herstellung der Rohrverbindung ist dann beendet.

Im Einzelnen werden zur Herstellung der vorstehend beschriebenen Rohrverbindung die folgenden Schritte durchgeführt: Zuerst werden alle Verbindungsflächen getrocknet und von Schmutz und losen Partikeln gereinigt. An den jeweiligen Stirnseiten der Rohrmäntel wird die dort befindliche Schaumschicht genügend tief ausgestochen, um feuchte Schaumreste zu entfernen. Es werden dann alle Abdichtungsflächen vorbereitet, und zwar auch die der bereits vorher auf das Rohr aufgeschobenen Schrumpfmuffe (Entfetten, Schmirgeln und Endreinigen).

Danach werden die Enden der Schrumpffolie und Schrumpfmuffe auf dem Rohrmantel für eine zentrierte Auflegung der Schrumpffolie und von Schmelzkleberstreifen markiert. Die Abdichtungsflächen auf den Rohrmänteln werden dann mit einer Schutzfolie zum Schutz gegen Schaumverunreinigungen bei der Nachdämmung abgeklebt. Es folgt dann eine Abdeckung des Muffenhohlraumes zur Nachdämmung mit einer Trennfolie. Hiernach wird die Schäumschalung mit einem zentrierten Schäumloch (22 mm) und zwei seitlichen Entlüftungslöchern (3-5 mm) montiert. Die Schäum- und Entlüftungslöcher werden mit einer Folie zum Schutz gegen Schaumverunreinigungen bei der Nachdämmung abgeklebt.

Es wird dann ein PUR-Probeschaum angesetzt, und es werden die Start- und Abbindezeit ermittelt. Anschließend folgt eine Feststellung der Durchmischungsqualität (Farbe), der Druckfestigkeit und der Zellgrößenverteilung. Danach wird die Nachdämmung des Muffenhohlraumes (Ringraumes) vorgenommen, wobei die entsprechenden Komponenten des Schaummateriales gemäß Schaumtabelle durch das Schäumloch eingeführt werden. Die Abbindezeit wird geprüft und der PUR-Austritt aus der Befüllöffnung begutachtet. Nach der PUR-Abbindung wird die Schäumschalung geöffnet und entfernt. Danach folgt die Entfernung der Trenn- und Schutzfolie, und es werden noch einmal alle Abdichtungsflächen auf Sauberkeit kontrolliert. Der Muffenmonteur führt visuelle Qualitätstests durch Begutachtung der PUR-Vollfüllung, der Schaumstruktur an der Oberfläche und der PUR-Trennung von der Trennfolie durch.

Hiernach werden die Abdichtungsflächen durch Schmirgeln und Säubern vorbereitet. Anschließend folgt eine Vorwärmung aller Abdichtungsflächen (Mantelrohr und Schrumpfmuffe) auf ca. 45-50 °C. Danach wird die Schrumpffolie aus Polyethylen straff mittig auf den ausgeschäumten Ringraum gelegt. Ferner werden Schmelzklebebänder straff auf die Rohrmäntel gelegt. Die aufzubringende Schrumpfmuffe wird über der aufgebrachten Schrumpffolie zentriert, und die verbliebene Trennfolie wird von den Schmelzklebestreifen entfernt.

Schließlich folgt eine gemeinsame Abschrumpfung und Abdichtung der Schrumpffolie und der Schrumpfmuffe von einer zur anderen Seite bis zum ordnungsgemäßen, konturgerechten und an den Enden spaltenfreien Anliegen der Schrumpfmuffe auf der Schrumpffolie, dem ausgeschäumten Ringraum und den Rohrmänteln.

Unmittelbar nach Beendigung des Schrumpfprozesses werden die Enden der Schrumpfmuffe mit einem wärmebeständigen Klebeband zur Niederhaltung der Schrumpfmuffenenden in der Abkühlphase abgeklebt.

## Patentansprüche

1. Verfahren zum Verbinden von ummantelten Mediumrohren (1,2), deren Mantel eine innere Schaumschicht (5) und eine äußere Kunststoffschicht (6) aufweist, wobei der Mantel gegenüber dem Rand der zu verbindenden Mediumrohre (1,2) axial zurückspringt, mit den folgenden Schritten:
Aufschieben einer Schrumpfmuffe (14) auf ein ummanteltes Mediumrohr (1,2) vor dem Verbinden der Mediumrohre (1,2);
Verbinden der Mediumrohre (1,2);
Anordnen einer Schäumschalung (8) um den von den verbundenen Mediumrohren (1,2) und den Stirnseiten der inneren Schaumschichten (5) und äußeren Kunststoffschichten (6) der beiden Rohre begrenzten Ringraum (11);
Ausschäumen des Ringraumes (11);
Entfernen der Schäumschalung (8);
Aufbringen einer Schrumpffolie (13) auf den ausgeschäumten Ringraum (11);
Anordnen der Schrumpfmuffe (14) über der aufgebrachten Schrumpffolie (13); und
Aufschrumpfen der Schrumpfmuffe (14) zur Abdeckung des ausgeschäumten Ringraumes (11), wobei die Schrumpffolie (13) vor der Schrumpfmuffe (14) oder zusammen mit der Schrumpfmuffe (14) aufgeschrumpft wird und der zwischen den Mantelenden der beiden Rohre (1,2) gebildete Ringraum (11) vor dem Anordnen der Schäumschalung (8) mit einer Trennfolie (7) abgedeckt wird.

2. Verfahren nach Anspruch 1, **dadurch gekennzeichnet, dass** eine Schäumschalung (8) mit einem Schäumloch (9) und mindestens einem Entlüftungsloch (10) verwendet wird.

3. Verfahren nach Anspruch 2, **dadurch gekennzeichnet, dass** eine Schäumschalung (8) mit einem zentralen Schäumloch (9) und zwei seitlichen Entlüftungslöchern (10) verwendet wird.

4. Verfahren nach einem der vorangehenden Ansprüche, **dadurch gekennzeichnet, dass** die an die Mantelenden grenzenden Abdichtungsflächen vor dem Anordnen der Schäumschalung (8) mit einer Schutzfolie abgeklebt werden.

5. Verfahren nach einem der vorangehenden Ansprüche, **dadurch gekennzeichnet, dass** der ausgeschäumte Ringraum (11) nach dem Entfernen der Schäumschalung (8) auf seine Qualität getestet wird.

## Claims

1. A method for connecting cladded medium pipes (1, 2) the shell of which having an inner foam layer (5) and an outer plastic layer (6) wherein the shell recedes axially with respect to the edge of the medium pipes (1, 2) which are to be connected, said method comprising the following steps:
pushing a shrinking sleeve (14) onto a cladded medium pipe (1, 2) prior to the connection of the medium pipes (1, 2);
connecting the medium pipes (1, 2);
arranging a foaming mould (8) around the annular space (11) limited by the connected medium pipes (1, 2) and the front sides of the inner foam layers (5) and outer plastic layers (6) of the two pipes;
foaming of the annular space (11);
removing the foaming mould (8);
applying a shrinking foil (13) onto the foamed annular space (11);
arranging the shrinking sleeve (14) over the applied shrinking foil (13); and
shrinking on the shrinking sleeve (14) for covering the foamed annular space (11) wherein the shrinking foil (13) is shrunk on prior to the shrinking sleeve (14) or together with the shrinking sleeve (14) and the annular space (11) formed between the shell ends of the two pipes (1, 2) is covered with a separation foil (7) prior to the arrangement of the foaming mould (8).

2. The method according to claim 1, **characterized in that** a foaming mould (8) with a foaming hole (9) and at least one vent hole (10) is used.

3. The method according to claim 2, **characterized in that** a foaming mould (8) with a central foaming hole (9) and two lateral vent holes (10) is used.

4. The method according to one of the preceding claims, **characterized in that** the sealing surfaces adjoining the shell ends are glued with a protective foil prior to the arrangement of the foaming mould (8).

5. The method according to one of the preceding claims, **characterized in that** the foamed annular space (11) is tested for its quality after the removal of the foaming mould (8).

## Revendications

1. Procédé de raccordement de tuyaux pour milieu (1,2) enveloppés, dont l'enveloppe présente une couche en mousse (5) intérieure et une couche en plastique (6) extérieure, où l'enveloppe est disposée en retrait axialement par rapport au bord des tuyaux pour milieu (1,2) enveloppés, lequel procédé comprend les étapes suivantes consistant à :
enfiler un manchon fretté (14) sur un tuyau pour milieu (1,2) enveloppé avant le raccordement des tuyaux pour milieu (1,2) ;
raccorder les tuyaux pour milieu (1,2) ;
disposer un coffrage de moussage (8) autour de l'espace annulaire (11) limité par les tuyaux pour milieu (1,2) raccordés et les côtés frontaux des couches en mousse (5) intérieures et des couches en plastique (6) extérieures des deux tuyaux ;
remplir de mousse l'espace annulaire (11) ;
retirer le coffrage de moussage (8) ;
appliquer un film rétractable (13) sur l'espace annulaire (11) rempli de mousse ;
disposer le manchon fretté (14) sur le film rétractable (13) appliqué ; et
fretter le manchon fretté (14) aux fins du recouvrement de l'espace annulaire (11) rempli de mousse, où le film rétractable (13) est fretté avant le manchon fretté (14) ou conjointement avec le manchon fretté (14) et l'espace annulaire (11) formé entre les extrémités d'enveloppe des deux tuyaux (1,2) est recouvert d'un film de séparation (7) avant l'agencement du coffrage de moussage (8).

2. Procédé selon la revendication 1, **caractérisé en ce qu'**un coffrage de moussage (8) doté d'un trou de moussage (9) et au moins d'un trou d'aération (10) est utilisé.

3. Procédé selon la revendication 2, **caractérisé en ce qu'**un coffrage de moussage (8) doté d'un trou central de moussage (9) et de deux trous latéraux d'aération (10) est utilisé.

4. Procédé selon l'une quelconque des revendications précédentes, **caractérisé en ce que** les surfaces d'étanchéification adjacentes aux extrémités de l'enveloppe sont protégées avant l'agencement du coffrage de moussage (8) avec un film de protection.

5. Procédé selon l'une quelconque des revendications précédentes, **caractérisé en ce que** la qualité de l'espace annulaire (11) rempli de mousse est testée après avoir retiré le coffrage de moussage (8).
